# EUROPÄISCHE PATENTSCHRIFT

(11) **EP 2 759 812 B1**
(45) Veröffentlichungstag und Bekanntmachung des Hinweises auf die Patenterteilung: **17.01.2018**
(21) Anmeldenummer: 13000429.4
(22) Anmeldetag: 29.01.2013
(51) Int. Cl.: G01F 23/26

(54) **Verfahren und Vorrichtung zur kapazitiven Füllstandsmessung von Flüssigkeiten oder Schüttgütern**
Method and apparatus for capacitative fill level measurement of liquids or bulk materials
Procédé et dispositif de mesure capacitive du niveau de remplissage de liquides ou produits en vrac

(43) Veröffentlichungstag der Anmeldung: 30.07.2014
(73) Patentinhaber: Rechner Industrie-Elektronik GmbH, 68623 Lampertheim (DE)
(72) Erfinder: Gebhardt, Stefan, 68623 Lampertheim (DE); Kohler, Armin Dr., 68623 Lampertheim (DE); Sünkeler, Martin, 23968 Proseken (DE); Koob, Thorsten, 64653 Lorsch (DE); Bischler, Eduard, 68623 Lampertheim (DE)
(74) Vertreter: Bill, Burkart Hartmut

(56) Entgegenhaltungen:
- GB-A- 792 484
- US-A- 4 142 415
- US-B1- 6 178 818

## Beschreibung

Die Erfindung betrifft ein Verfahren und eine Vorrichtung zur kapazitiven Füllstandsmessung von Flüssigkeiten und/oder Schüttgütern in einem Behälter mit wenigstens einem an eine Messelektronik angeschlossenen Messfühler.

### Wegen ihrer Robustheit werden kapazitive

Füllstandsmessungen in vielen Bereichen der Technik eingesetzt.

Dabei ist das dominierende Prinzip, dass in einem leitfähigen Behälter ein leitfähiger Stab oder ein leitfähiges Seil bzw. Kabel als Elektrode fungierend isoliert angeordnet ist. Die Behälterwand und die Elektrode bilden eine Kondensatoranordnung. Das elektrische Feld dieser Kondensatoranordnung erfüllt das gesamte Behältervolumen. Wird dieses Behältervolumen mit einem dielektrisch wirkenden Material gefüllt, wird der Kapazitätswert dieser Kondensatoranordnung verändert.

GB 792,484 offenbart eine Vorrichtung zur kapazitiven Füllstandsmessung in einem Behälter mit drei darin angeordneten, isolierten Flächenelektroden, die zueinander parallel angeordnet sind, wobei die beiden äußeren Elektroden mit der Behälterwand galvanisch verbunden sind.

Da alle technischen Produkte eine gegenüber Luft höhere dielektrische Wirkung, die als Permittivität bezeichnet wird, besitzen, wird der Kapazitätswert, insbesondere bei lagestabiler, im Wesentlichen vertikaler Halterung im Behälter und entsprechender Ausführung der als Sonden bzw. Messfühler bezeichneten Stäbe oder Kabel bzw. Seile, die elektrisch eine Elektrode der Kondensatoranordnung gegenüber der Behälterwand als zweiter Elektrode darstellen, kontinuierlich mit der Behälterfüllung vergrößert. Die Kapazitätsänderung zwischen dem Leerzustand und den verschiedenen Füllzuständen wird durch entsprechende elektronische Messelektroniken erfasst und in die gewünschten analogen oder schaltenden Ausgangssignale umgeformt.

Eine elektronische Auswertung der mittels kapazitiven Messfühlern gewonnenen elektrischen Primärsignale ist beispielsweise aus der DE 1275777 bekannt.

Obwohl üblicherweise von Füllstandsmessungen gesprochen wird, ist zumeist eine Aussage über das Volumen bzw. die Masse des Materials in einem Behälter erwünscht. Existiert ein linearer Zusammenhang zwischen Füllhöhe und Volumenzuwachs, ist diese Aussage leicht möglich, da lediglich ein konstanter Faktor zu berücksichtigen ist.

Hierzu sind folgende Voraussetzungen zu erfüllen: Der Behälterquerschnitt bleibt über der Höhe konstant und die Füllstandsmessung liefert reproduzierbare Ergebnisse. Wie schon beschrieben, wird das Signal der Füllstandsmessung durch einen Vergleich des korrespondierenden Kapazitätswertes des jeweils aktuellen Füllstandes mit dem Kapazitätswert des Leerzustandes ermittelt.

Bei vielen Materialien kommt es jedoch beispielsweise durch Elektrostatik oder große Viskositäten zu Anhaftungen sowohl an der Behälterwand als auch an den Messfühlern. Da die Anhaftungsneigung durch einen Materialwechsel, verschiedene Prozessparameter, wie beispielsweise Temperatur, Feuchtigkeit und/oder Korngröße beeinflusst wird, kann der Vergleichswert des "leeren" Behälters oft nicht mehr als konstant angesehen werden. Bei ungünstigen Behältergeometrien kann dies zur Unbrauchbarkeit der Messung führen.

Dieses Problem kann teilweise dadurch entschärft werden, indem der durch Abgleich zu ermittelnde Vergleichswert "leerer Behälter" in einer realen Situation, also mit typischen Materialansätzen, erfasst wird. Mit den oben angegebenen Abhängigkeiten erfordert das jedoch eine häufige Korrektur des Abgleiches bei wechselnden Bedingungen.

Die für eine aussagekräftige Füllstandsmessung ideale Behältergeometrie bewirkt eine lineare Kapazitätszunahme über der Füllhöhe. Das ist für die Praxis immer dann ausreichend gegeben, wenn bei konstantem Behälterquerschnitt das Verhältnis zwischen Höhe und Durchmesser des Behälters groß ist. Als Beispiel dafür könnte man einen Zylinderkondensator betrachten, in dessen Inneren das elektrische Feld ideal diese Voraussetzungen liefert. An den Enden des Zylinderkondensators treten jedoch "Randverzerrungen" der elektrischen Felder auf, die zu mehr oder weniger starken Nichtlinearitäten führen.

Bei vielen in der technischen Praxis auftretenden Behälterformen ist eine quantitative Beurteilung über den Einfluss von Randverzerrungen auf die Linearität der Füllstandsmessungen kaum noch möglich. Speziell bei dem häufig auftretenden Wunsch, den Füllstandsmessbereich maximal vom Boden bis zur Oberkante zu realisieren, sind sowohl eine theoretische Voraussage, noch viel weniger eine Berechnung der Linearitätsfehler möglich.

Neben dem bisher beschriebenen Prinzip einer aus leitfähiger Behälterwand und dazu isolierter Sonde gebildeten Kondensatoranordnung ist weiterhin eine andere Version bekannt, bei der 2 Elektroden in konstantem Abstand und zueinander isoliert im Behälter angeordnet werden. So wird z. B. bei Messungen in niedrigviskosen Flüssigkeiten im Behälterinneren bzw. als Bypass ein schlankes Rohr (Messrohr) mit einer zentrisch angeordneten Innenelektrode als Messanordnung verwendet. Diese Anordnung entspricht dem oben beschriebenen Zylinderkondensator mit einem großen Verhältnis zwischen Höhe und Durchmesser. Querschnittsänderungen des Behälters haben somit keinen Einfluss auf das Messsignal.

Dieses Prinzip ist jedoch für hochviskose Flüssigkeiten sowie Schüttgüter nicht anwendbar, da kein gleicher Füllstand im Behälter und im Messrohr garantiert werden kann.

Mit einer weiteren Variante in Form parallel geführter Elektroden ist auch dieses Problem lösbar. Dazu werden zwei voneinander isolierte Elektroden in Form von Drähten oder Bändern verwendet. Da sich dann aber das elektrische Feld vor allem zwischen diesen parallelen Elektroden konzentriert und das zu erfassende Material nur zu einem kleinen Teil von diesem Messfeld erfasst wird, führt eine solche Anordnung zu unbefriedigenden Ergebnissen.

Hier kann Abhilfe dadurch geschaffen werden, indem zwischen den Elektroden eine Abschirmung geschaffen wird, so dass sich ein Messfeld im Außenbereich der parallel geführten Elektroden ausbilden kann.

Es sind zahlreiche Varianten zur konkreten Ausführung einer derartigen Abschirmung bekannt, sowohl zur mechanischen Realisierung in den Messsonden als auch zur Gewinnung eines geeigneten Abschirmungspotentials innerhalb der Messelektroniken.

US 6,178,818 B1 offenbart eine Sensoranordnung zur Füllstandsmessung, deren Aufbau auf einem fünfadrigen Sensorkabel basiert. Dabei werden zwei parallele Sensoranordnungen mit den jeweiligen äußeren Adernpaaren realisiert, die mittlere Ader wird als Schirmung zwischen beiden Sensoranordnungen benutzt.

US 4 142 415 offenbarte eine weitere Ausführung einer Füllstandsmessung. Als Sensorelement dient ein Träger, auf den mehrere parallele Elektroden aufgebracht sind. Diese Elektroden werden zu einer Gesamtkapazität zusammengefasst, indem jeweilige Elektroden parallel geschaltet werden.

Die zuletzt beschriebenen Messanordnungen sind also in ihrem Messverhalten von Behältergeometrien weitgehend unabhängig, wenn ein Mindestabstand zwischen einer Messsonde und der Behälterwand eingehalten wird. Dieser Abstand sollte so groß sein, dass das Messfeld an der Wand nur noch einen vernachlässigbaren Anteil am Gesamtfeld besitzt. Diese Bedingung korrespondiert mit dem selbstverständlichen Bestreben, zur Verhinderung von Materialbrückenbildung einen ausreichenden Abstand zwischen Wand und Sensor herzustellen. Der Nachteil der Messfühler mit parallel geführten Elektroden besteht jedoch in der starken Abhängigkeit von Materialanhaftungen an der Fühleroberfläche, da der Feldanteil des Messfeldes direkt an der Oberfläche am größten ist.

Allein die wenigen oben genannten Abhängigkeiten zeigen auf, dass die Bedingungen zur Realisierung einer konkreten Füllstandsmessung sehr komplex sind. In der Praxis wird meist durch den Anwender eine Messanordnung ausgewählt, die zwar gewisse Anschlussbedingungen erfüllt, jedoch werden die Zusammenhänge der primären Signalgewinnung durch das elektrische Messfeld nicht oder unzureichend berücksichtigt. Dann kommt es vor allem bei Fehlen einer fachlichen Beratung häufig zu Fehlfunktionen, die der Messelektronik zugeschrieben werden, jedoch tatsächlich in der falschen Auswahl der Messanordnung begründet sind.

Wird bei der Inbetriebnahme einer kapazitiven Füllstandsmessung eine Fehlfunktion erkannt, muss beim derzeitigen Stand der Technik die gesamte Messanordnung ausgetauscht werden. Das bedeutet meist einen sehr großen Zeit- und Kostenaufwand.

Eine Aufgabe der Erfindung besteht darin, ein verbessertes kapazitives Messverfahren und eine verbesserte kapazitive Messvorrichtung zur Bestimmung von Füllständen in Behältern für eine Vielzahl unterschiedlicher messtechnischer Anforderungen hinsichtlich Behälterarten und -geometrien sowie unterschiedlichen Charakteristika von darin einzufüllendem Füllmaterial bereitzustellen, welche auf wesentlich einfachere Weise Anpassungen und/oder Modifikationen an diese unterschiedlichen messtechnischen Anforderungen gewährleisten, insbesondere auch auf einfache Weise einen Austausch von, eine Umschaltung zwischen und/oder Integration von verwendbaren bzw. verwendeten Elektroden ermöglichen, um insbesondere auch höchst flexibel an die speziellen Bedingungen von Tanks oder Behältern jeglicher Art, wie Bauform, Bauart und Material angepasst werden zu können.

Zweckmäßig sollen außerdem Abgleicharbeiten einfach und auch für fachfremde Personen ausführbar sein. Des Weiteren soll die Erfindung insbesondere ein Verfahren und eine Vorrichtung zur kontinuierlichen kapazitiven Füllstandsmessung in Behältern ermöglichen.

Die Erfindung schlägt hierzu Lösungen der Aufgabe vor, welche durch die Gegenstände mit den Merkmalen der anhängigen unabhängigen Ansprüche 1, 6 wiedergegeben sind. Zweckmäßige Ausgestaltungen und Weiterbildungen sind Gegenstand der abhängigen Ansprüche.

Demgemäß schlägt die Erfindung ein Verfahren zur kapazitiven Füllstandsmessung von Flüssigkeiten und/oder Schüttgütern in einem Behälter mit wenigstens einem an eine Messelektronik angeschlossenen Messfühler vor, wobei der Messfühler aus mehreren, wenigstens drei gegeneinander elektrisch isolierten Elektroden aufgebaut ist, die zur Füllstandsmessung in dem Behälter, insbesondere im Wesentlichen vertikal in den Behälter, eingebracht werden und sich im eingebrachten Zustand in dem Behälter, insbesondere somit im Wesentlichen vertikal erstrecken.

Gemäß der Erfindung werden diese wenigstens drei Elektroden an die Messelektronik angeschlossen und in wenigstens einem ersten oder in wenigstens einem zweiten Messmodus betrieben.

In dem ersten Messmodus werden an die wenigstens drei Elektroden des Messfühlers jeweils unterschiedliche Potentiale angelegt, wobei an eine erste Elektrode ein erstes Potential angelegt wird, an eine zweite Elektrode ein gegenüber dem ersten Potential unterschiedliches zweites Potential angelegt wird, und die zweite Elektrode als Gegenelektrode zu der ersten Elektrode betrieben wird, und an die dritte Elektrode ein gegenüber dem ersten und dem zweiten Potential unterschiedliches drittes Potential angelegt wird und die dritte Elektrode als eine Schirmelektrode betrieben wird.

In dem zweiten Messmodus wird ein erstes Potential an wenigstens eine der wenigstens drei Elektroden des Messfühlers angelegt und wenigstens ein gegenüber dem ersten Potential unterschiedliches zweites Potential an eine elektrisch leitfähige Behälterwand angelegt, wobei die Messelektronik und die elektrisch leitfähige Behälterwand galvanisch miteinander verbunden werden, und die elektrisch leitfähige Behälterwand als Gegenelektrode zu der wenigstens einen mit dem ersten Potential belegten Elektrode des Messfühlers betrieben wird.

Alternativ wird in dem zweiten Messmodus, insbesondere bei Vorliegen nichtleitfähiger Behälter, ein gegenüber dem ersten Potential unterschiedliches zweites Potential an eine separat zu dem Messfühler innerhalb des Behälters oder außen an der Behälterwand angeordnete Hilfselektrode angelegt, wobei die Messelektronik und die Hilfselektrode galvanisch miteinander verbunden werden, und die Hilfselektrode als Gegenelektrode zu der wenigstens einen mit dem ersten Potential belegten Elektrode des Messfühlers betrieben wird.

Ein erfindungsgemäßes Verfahren zur kapazitiven Füllstandsmessung wird wahlweise entweder in dem ersten oder in dem zweiten Messmodus betrieben, durch eine Umschaltung der Messelektronik in den ersten oder den zweiten Messmodus. Eine derartige Auswahl von einem der wenigstens zwei Messmodi erfolgt, indem zwischen den wenigstens zwei Messmodi durch ein Umschaltwerk umgeschaltet wird, welches als Teil der Messelektronik ausgebildet sein kann.

In einer weiteren Ausführungsform des erfindungsgemäßen Verfahrens wird wahlweise an eine oder an mehrere der Elektroden des Messfühlers ein gleiches Potential angelegt.

Infolgedessen kann mit dem erfindungsgemäßen Verfahren eine Messung in leitfähigen als auch in nichtleitfähigen Behältern erfolgen. Darüber hinaus ermöglicht das erfindungsgemäße Verfahren, messtechnische Einflüsse wie Behälterart und -geometrie, Anhaftungseigenschaften von Materialien an Behälterwand und Messfühler sowie weiterhin Materialcharakteristika zu berücksichtigen und derartige Einflüsse auszuschließen oder zumindest zu minimieren.

In einer weiteren Ausgestaltung des Verfahrens zur kapazitiven Füllstandsmessung nach der Erfindung werden wahlweise ein- oder mehrere weitere identische oder unterschiedliche Messfühler in den Behälter eingebracht und an die Messelektronik angeschlossen und betrieben.

In einer weiteren Ausführungsform des erfindungsgemäßen Verfahrens wird, im Falle des zweiten Messmodus, das Messfeld durch eine einseitige Abschirmung in Form mehrerer, als Schirmelektroden (9) betriebener Elektroden für wenigstens eine der wenigstens drei Elektroden (5, 5', 5'', 5 ''', 5'''') des Messfühlers (8) ausgerichtet.

Die Erfindung schlägt darüber hinaus eine Vorrichtung zur kapazitiven Füllstandsmessung von Flüssigkeiten und/oder Schüttgütern in einem Behälter mit wenigstens einem an eine Messelektronik anschließbaren Messfühler vor, wobei die Messelektronik wenigstens drei unterschiedliche Potentiale bereitstellt und der Messfühler aus mehreren, wenigstens drei gegeneinander elektrisch isolierten Elektroden gebildet ist, die zur Füllstandsmessung in dem Behälter, insbesondere im Wesentlichen vertikal in den Behälter, einzubringen sind und sich im eingebrachten Zustand in dem Behälter, insbesondere somit im Wesentlichen vertikal erstrecken.

Die erfindungsgemäße Vorrichtung ist in wenigstens einem ersten oder in wenigstens einem zweiten Messmodus betreibbar, wobei hierzu wenigstens drei Elektroden an die Messelektronik anschließbar sind.

In dem ersten Messmodus sind an die wenigstens drei Elektroden des Messfühlers der erfindungsgemäßen Vorrichtung die jeweils drei unterschiedlichen Potentiale anlegbar, wobei an eine erste Elektrode ein erstes Potential anlegbar ist, an eine zweite Elektrode ein gegenüber dem ersten Potential unterschiedliches zweites Potential anlegbar ist, um die zweite Elektrode als Gegenelektrode zu der ersten Elektrode zu betreiben, und an die dritte Elektrode ist ein gegenüber dem ersten und dem zweiten Potential unterschiedliches drittes Potential anlegbar, um die dritte Elektrode als eine Schirmelektrode zu betreiben.

In dem zweiten Messmodus ist an wenigstens eine der wenigstens drei Elektroden des Messfühlers des Messfühlers ein erstes Potential anlegbar und wenigstens ein gegenüber dem ersten Potential unterschiedliches zweites Potential entweder an eine elektrisch leitfähige Behälterwand des Behälters anlegbar, wobei die Messelektronik und die elektrisch leitfähige Behälterwand galvanisch miteinander verbunden sind, um die elektrisch leitfähige Behälterwand als Gegenelektrode zu der wenigstens einen mit dem ersten Potential belegten Elektrode des Messfühlers zu betreiben.

Alternativ ist in dem zweiten Messmodus, bevorzugt bei Vorliegen eines nichtleitenden Behälters, ein zweites Potential an eine separat zu dem Messfühler innerhalb des Behälters oder außen an der Behälterwand angeordnete Hilfselektrode anlegbar, wobei die Messelektronik und die Hilfselektrode galvanisch miteinander verbunden sind, um die Hilfselektrode als Gegenelektrode zu der wenigstens einen mit dem ersten Potential belegten Elektrode des Messfühlers zu betreiben.

Die erfindungsgemäße Vorrichtung zur kapazitiven Füllstandsmessung ist dazu ausgebildet, wahlweise entweder in dem ersten oder in dem zweiten Messmodus betrieben zu werden.

Eine derartige Auswahl zwischen den wenigstens zwei Messmodi ist bevorzugt dadurch ermöglicht, dass die Vorrichtung zwischen den wenigstens zwei Messmodi durch ein Umschaltwerk umgeschaltet wird, welches als Teil der Messelektronik ausgebildet sein kann.

In einer besonders bevorzugten Ausführungsform ist die erfindungsgemäße Vorrichtung dazu ausgebildet, wahlweise an eine oder an mehrere der Elektroden des Messfühlers ein gleiches Potential anzulegen und insbesondere den leitfähigen Behälter bzw. die Hilfselektrode wahlweise mit der Elektronik zu verbinden oder die Verbindung zu unterbrechen.

Die erfindungsgemäße Vorrichtung zeichnet sich insbesondere dadurch aus, dass die Elektroden des Messfühlers starr, flexibel, drahtförmig oder bandförmig ausgebildet sein können und/oder die Elektroden des Messfühlers in einem mechanischen Verbund ausgebildet sind und/oder, dass insbesondere handelsübliche, mehradrige Kabel als Messfühler verwendbar sind.

Des Weiteren sind die Elektroden des Messfühlers gemäß einer bevorzugten Ausführungsform der erfindungsgemäßen Vorrichtung in dem Behälter parallel zueinander geführt oder weisen zumindest abschnittsweise zueinander konstante Abstände auf.

In einer weiteren Ausgestaltung der erfindungsgemäßen Vorrichtung zur kapazitiven Füllstandsmessung sind zusätzlich zu dem Messfühler wahlweise ein- oder mehrere weitere identische oder unterschiedliche Messfühler in den Behälter einbringbar und an die Messelektronik anschließbar und betreibbar.

In einer weiteren Ausgestaltung der erfindungsgemäßen Vorrichtung sind die in den Messfühlern angeordneten Elektroden mit Isolierstoffen zu einem Verbund ausgebildet, welche bei der Füllstandsmessung von Flüssigkeiten und/oder Schüttgütern gegenüber diesen chemisch beständig sind und/oder eine Abriebbeständigkeit und Zugfestigkeit gewährleisten.

Des Weiteren ist eine bevorzugte Ausführungsform einer erfindungsgemäßen Vorrichtung zur kapazitiven Füllstandsmessung ausgebildet, die Gewinnung von mindestens einem Grenzwertschaltsignal, mindestens einem analogen Füllstandssignal oder gleichzeitig einer Kombination aus analogen Füllstandssignalen und Grenzwertsignalen zu ermöglichen.

Das erfindungsgemäße Verfahren und die erfindungsgemäße Vorrichtung erlauben darüber hinaus die Verwendung von flexiblen oder starren Messfühlern, welche bevorzugt auch an flexible oder starre Körper angebracht sein können und insbesondere in elektrisch isolierende Körper wie Sondenhülsen oder Führungsschienen integriert sind, beispielsweise an oder innerhalb von Isolationskörpern wie z.B. Kunststoffrohren oder Kunststoffhalterungen geführt.

Die Erfindung wird nachfolgend anhand einiger bevorzugter, jedoch lediglich beispielhafter Ausführungsformen unter Bezugnahme auf die beigefügten Zeichnungen näher beschrieben.

In den Zeichnungen zeigen:

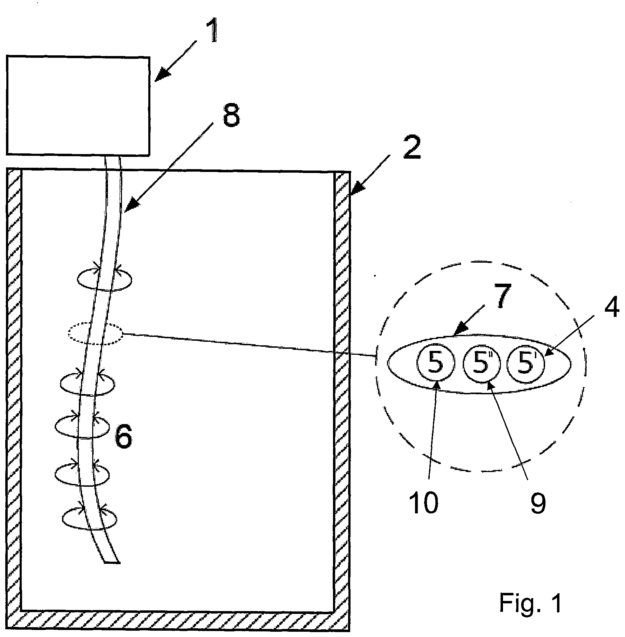

- Fig. 1: einen schematischen Querschnitt durch einen Behälter, dessen Füllstand mit Flüssigkeiten oder Schüttgütern nach einer Ausführungsform der Erfindung in einem ersten Messmodus bestimmt wird, wobei der Behälter eine leitfähige Behälterwand besitzt und zwischen Messelektronik und leitfähiger Behälterwand keine galvanische Verbindung besteht, oder wobei der Behälter eine nicht-leitfähige Behälterwand besitzt,

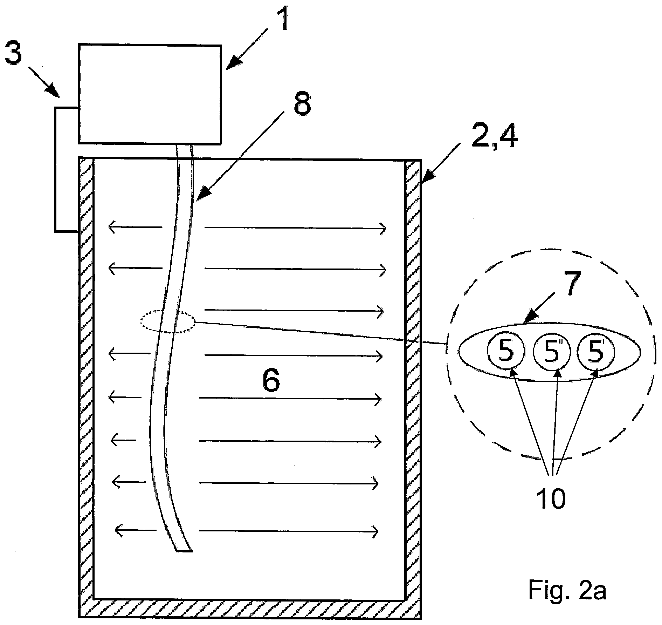

- Fig. 2a: einen schematischen Querschnitt durch einen Behälter, dessen Füllstand mit Flüssigkeiten oder Schüttgütern nach einer Ausführungsform der Erfindung in einem zweiten Messmodus bestimmt wird, wobei der Behälter eine leitfähige Behälterwand besitzt und zwischen Messelektronik und leitfähiger Behälterwand eine galvanische Verbindung besteht, um die Behälterwand als Gegenelektrode zu betreiben,

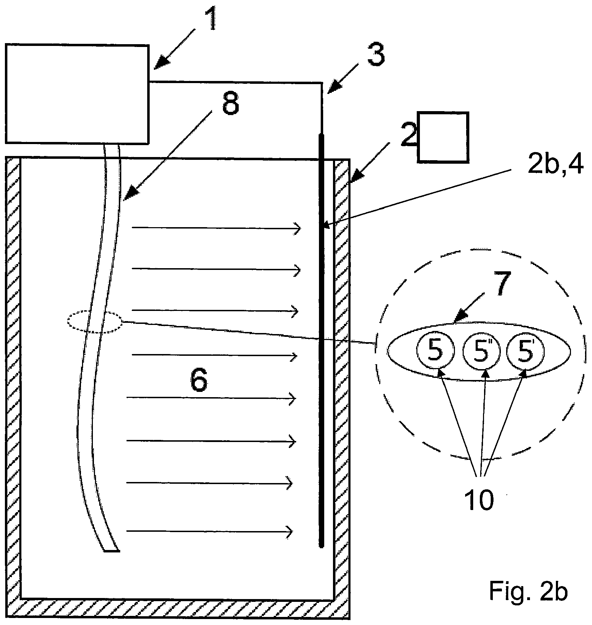

- Fig. 2b: einen schematischen Querschnitt durch einen Behälter, dessen Füllstand nach einer Ausführungsform eines erfindungsgemäßen Messverfahrens in dem zweiten Messmodus bestimmt wird, wobei der Behälter nichtleitfähig ist, jedoch zwischen Messelektronik und einer, insbesondere an der Behälterwand angeordneten, Hilfselektrode eine galvanische Verbindung besteht, um die Hilfselektrode als Gegenelektrode zu betreiben,

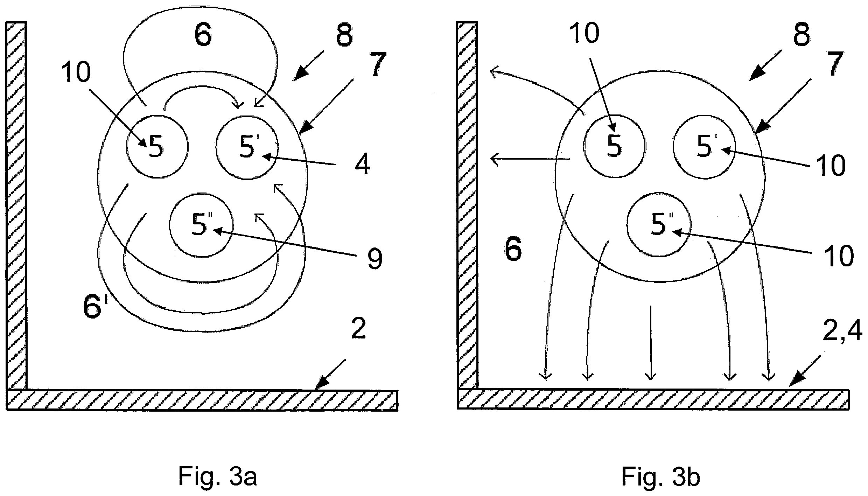

- Fig. 3a, b: schematische Querschnitte durch eine leitfähige Behälterwand und durch einen als 3-adrige Kabelsonde ausgebildeten Messfühler nach einer Ausführungsform der Erfindung zur Veranschaulichung eines ersten Messmodus ohne eine galvanische Verbindung zwischen Messelektronik und Behälterwand (a) und eines zweiten Messmodus mit galvanischer Verbindung zwischen Messelektronik und Behälterwand (b),

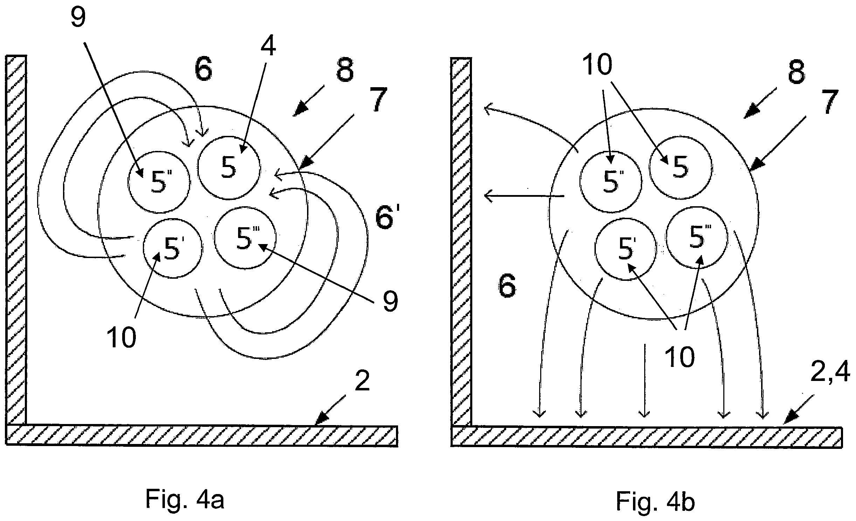

- Fig. 4a, b: schematische Querschnitte durch eine leitfähige Behälterwand und durch einen als 4-adrige Kabelsonde ausgebildeten Messfühler nach einer weiteren Ausführungsform der Erfindung zur Veranschaulichung eines ersten Messmodus ohne eine galvanischen Verbindung zwischen Messelektronik und Behälterwand (a) und eines zweiten Messmodus mit galvanischer Verbindung zwischen Messelektronik und Behälterwand (b),

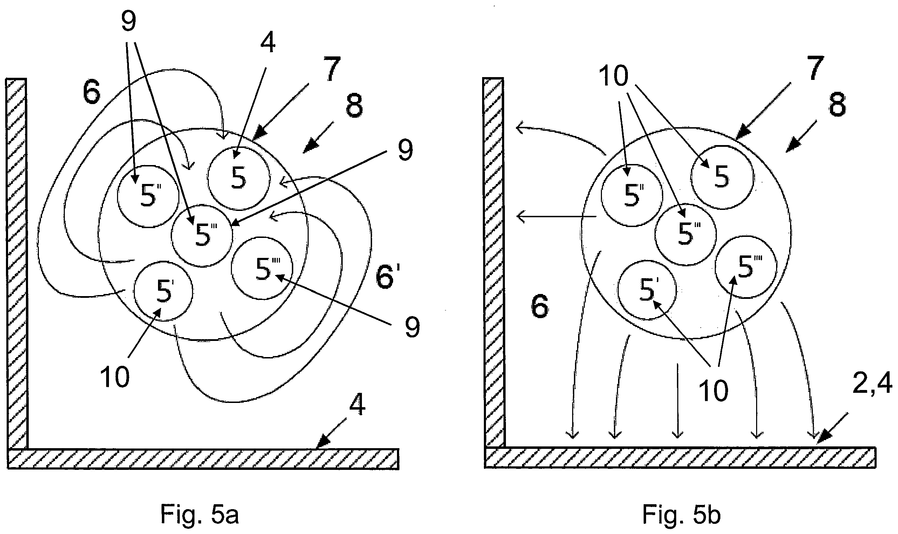

- Fig. 5a, b: schematische Querschnitte durch eine Behälterwand und durch einen als 5-adrige Kabelsonde ausgebildeten Messfühler nach einer weiteren Ausführungsform der Erfindung zur Veranschaulichung eines ersten Messmodus ohne eine galvanische Verbindung zwischen Messelektronik und Behälterwand (a) und eines zweiten Messmodus mit galvanischer Verbindung zwischen Messelektronik und Behälterwand (b).

Nachfolgend werden unter Bezugnahme auf die Zeichnungen bevorzugte Ausführungsformen im Rahmen der Erfindung beschrieben, wobei gleiche oder gleichwirkende Komponenten zumindest teilweise mit denselben Bezugszeichen belegt sind.

Die Figuren 1 bis 5b zeigen schematisch unterschiedliche Ausführungsformen der Erfindung zum Betreiben einer erfindungsgemäßen Vorrichtung in unterschiedlichen Messmodi zur Durchführung bevorzugter erfindungsgemäßer Verfahren zur kapazitiven Füllstandsmessung von Flüssigkeiten und/oder Schüttgütern in einem Behälter 2 mit wenigstens einem an eine Messelektronik 1 angeschlossenen Messfühler 8, wobei der Messfühler 8 aus mehreren, wenigstens drei gegeneinander elektrisch isolierten Elektroden 5, 5', 5'', 5 ''', 5'''' aufgebaut ist.

Zur Füllstandsmessung in dem Behälter 2 wird gemäß der Figuren 1 bis 5b der Messfühler 8 mit den wenigstens drei gegeneinander elektrisch isolierten Elektroden 5, 5', 5'', 5 "', 5"" in den Behälter 2 eingebracht und erstreckt sich im eingebrachten Zustand in dem Behälter 2. Der Messfühler 8 wird an die Messelektronik 1 angeschlossen und kann daraufhin in wenigstens einem ersten oder in wenigstens einem zweiten Messmodus betrieben werden.

Die erfindungsgemäße Vorrichtung ist ausgebildet, dass in einem ersten Messmodus, wie z.B. in den Figuren 1, 3a, 4a und 5a gezeigt, an die wenigstens drei Elektroden 5, 5', 5'', 5''', 5'''' des Messfühlers 8 jeweils unterschiedliche Potentiale angelegt werden, wobei an eine erste Elektrode 5 ein erstes Potential angelegt wird und diese erste Elektrode 5 damit als Messelektrode 10 betrieben wird. An eine zweite Elektrode 5' wird ein gegenüber dem ersten Potential unterschiedliches zweites Potential angelegt, und diese zweite Elektrode 5' damit als Gegenelektrode 4 zur Messelektrode 10 betrieben. An die dritte Elektrode 5'', 5''', 5 '''' wird ein gegenüber dem ersten und dem zweiten Potential unterschiedliches drittes Potential 9 angelegt, wobei die dritte Elektrode 5'', 5''', 5 '''' damit als eine Schirmelektrode 9 betrieben wird.

Die erfindungsgemäße Vorrichtung ist zumindest alternativ, gemäß bevorzugter Ausführung jedoch ergänzend ferner ausgebildet, dass in einem zweiten Messmodus, wie z.B. in den Figuren 2a, 2b , 3b, 4b und 5b gezeigt, ein erstes Potential an wenigstens eine, bevorzugt jedoch an alle, der wenigstens drei Elektroden 5, 5', 5'', 5 ''', 5'''' des Messfühlers 8 angelegt wird und wenigstens ein gegenüber dem ersten Potential unterschiedliches zweites Potential an eine elektrisch leitfähige Behälterwand des Behälters 2 angelegt, wie in den Figuren 2a, 3b, 4b und 5b gezeigt, wobei die Messelektronik 1 und die elektrisch leitfähige Behälterwand des Behälters 2 galvanisch miteinander verbunden 3 werden oder sind, um daraufhin den elektrisch leitfähigen Behälter 2 als Gegenelektrode zu den mit dem ersten Potential belegten Elektroden 5, 5', 5'', 5 ''', 5'''' des Messfühlers 8 zu betreiben.

Alternativ zu diesem Betreiben des zweiten Messmodus, kann, wie z.B. in der Figur 2b gezeigt, im zweiten Messmodus ein gegenüber dem ersten Potential unterschiedliches zweites Potential an eine separat zu dem Messfühler 8 innerhalb des Behälters 2 oder außen an der Behälterwand angeordnete Hilfselektrode 2b angelegt werden, wobei die Messelektronik 1 und die Hilfselektrode 2b dann galvanisch miteinander verbunden 3 werden, und die Hilfselektrode 2b als Gegenelektrode 4 zu den mit dem ersten Potential belegten Elektroden 5, 5', 5'', 5 ''', 5'''' des Messfühlers 8 betrieben wird.

Die Messelektronik 1 ist folglich ausgebildet, wenigstens drei unterschiedliche Potentiale zur Verfügung zu stellen und die erfindungsgemäße Vorrichtung ist in wenigstens einem ersten oder in wenigstens einem zweiten Messmodus betreibbar, wobei hierzu diese wenigstens drei Elektroden 5, 5', 5'', 5 ''', 5'''' an die Messelektronik 1 anzuschließen sind, und daraufhin in dem vorbeschriebenen ersten oder zweiten Messmodus betreibbar sind.

In einer bevorzugten Ausführungsform des erfindungsgemäßen Verfahrens zur kapazitiven Füllstandsmessung wird eine Füllstandsmessung wahlweise entweder, wie in den Figuren 1, 3a, 4a und 5a gezeigt, in dem ersten Messmodus oder, wie in den Figuren 2a, 2b , 3b, 4b und 5b gezeigt, in dem zweiten Messmodus betrieben.

Eine bevorzugte Ausführungsform einer erfindungsgemäßen Vorrichtung zur kapazitiven Füllstandsmessung ist dementsprechend dazu ausgebildet, wahlweise entweder, wie in den Figuren 1, 3a, 4a und 5a gezeigt, in dem ersten Messmodus oder, wie in den Figuren 2a, 2b , 3b, 4b und 5b gezeigt, in dem zweiten Messmodus betrieben zu werden.

Eine derartige Auswahl von einem der wenigstens zwei Messmodi erfolgt, indem zwischen den wenigstens zwei Messmodi durch ein Umschaltwerk (nicht in den Figuren gezeigt) umgeschaltet wird, welches als Teil der Messelektronik ausgebildet sein kann.

In einer bevorzugten Ausführungsform des erfindungsgemäßen Verfahrens zur kapazitiven Füllstandsmessung wird an eine oder an mehrere der Elektroden 5, 5', 5'', 5 ''', 5'''' des Messfühlers 8 ein gleiches Potential 9 angelegt, beispielsweise wie in der Figur 4a, an die Elektroden 5'' und 5''' oder wie in der Figur 5a, an die Elektroden 5'' und 5'' und 5'''. Eine bevorzugte Ausführungsform einer erfindungsgemäßen Vorrichtung zur kapazitiven Füllstandsmessung ist dementsprechend hierzu ausgebildet.

Im Folgenden werden weitere bevorzugte Ausführungsformen und Weiterbildungen des erfindungsgemäßen Verfahrens und der erfindungsgemäßen Vorrichtung anhand der Figuren 1 bis 5b detailliert beschrieben.

In den bevorzugten Ausführungsformen der Erfindung gemäß der Figuren 1, 2a, und 2b umfasst ein Messfühler einer erfindungsgemäßen Messvorrichtung wenigstens drei gegeneinander isolierte, vorzugsweise gleich lange, parallel zueinander geführte, jeweils mit zumindest abschnittsweise zueinander konstanten Abständen aufweisende, nebeneinander angeordnete Elektroden 5, 5', 5'', insbesondere mit einer Ummantelung als Isolation 7.

Es sei an dieser Stelle bereits angemerkt, dass die Erfindung in vorteilhafter Weise die Verwendung von flexiblen oder starren Messfühlern vorzieht, welche bevorzugt auch an flexible oder starre Körper angebracht sein können und insbesondere in andere elektrisch isolierende Körper wie Sondenhülsen oder Führungsschienen integriert sein können, und beispielsweise an oder innerhalb von Isolationskörpern wie z.B. Kunststoffrohren oder Kunststoffhalterungen geführt sein können.

Gemäß der bevorzugten Ausführungsformen der erfindungsgemäßen Vorrichtung nach der Figur 1, befindet sich eine mittlere Elektrode 5'' vorzugsweise zwischen den äußeren Elektroden 5, 5', damit durch Anlegung eines geeigneten elektrischen Potentials 9 eine Abschirmwirkung zwischen den äußeren Elektroden 5 und 5' ermöglicht ist.

Optimale Messergebnisse lassen sich insbesondere mit band-oder streifenförmigen Elektroden erzielen. Die Streifenbreite der Elektroden 5, 5', 5'', 5''', 5'''' kann für alle Elektroden gleich sein. Die Abschirmwirkung zwischen den äußeren Elektroden 5 und 5' kann aber bevorzugt durch eine größere Streifenbreite der inneren Elektrode 5'' verbessert werden.

Die Figuren 1, 2a und 2b zeigen zwei Messmodi des erfindungsgemäßen Verfahrens, wobei die erfindungsgemäße Vorrichtung in wenigstens einem ersten oder in wenigstens einem zweiten Messmodus betreibbar ist, und wobei die Vorrichtung zwischen diesen beiden Messmodi auswählbar umgeschaltet werden kann.

Bei keiner galvanischen Verbindung, also weder zwischen dem Behälter 2 und der Messelektronik 1 noch zwischen einer innerhalb des Behälters 2 oder außen an der Behälterwand angeordneten Hilfselektrode 2b und der Messelektronik 1 werden, wie in Ausführungsbeispiel nach Fig. 1 gezeigt, das erfindungsgemäße Verfahren und die erfindungsgemäße Vorrichtung im ersten Messmodus betrieben.

In diesem ersten Messmodus gemäß Fig. 1, bei dem an die wenigstens drei Elektroden 5, 5', 5'' des Messfühlers 8 jeweils unterschiedliche Potentiale angelegt werden, wird an die erste Elektrode 5 ein erstes Potential 10, die zweite Elektrode 5' wird als Gegenelektrode 4 zu der ersten Elektrode betrieben, indem an die zweite Elektrode 5' ein gegenüber dem ersten Potential unterschiedliches zweites Potential 4 angelegt wird, und an die dritte Elektrode 5'' wird wiederum ein gegenüber dem ersten und dem zweiten Potential unterschiedliches drittes Potential 9 angelegt, so dass die dritte Elektrode 5'' als eine Schirmelektrode 9 betrieben werden kann.

Damit bildet sich ein Messfeld 6 um den Messfühler 8 über dessen gesamte Länge aus, so dass bei ausreichendem Abstand zu einer leitfähigen Behälterwand 2 keine Beeinflussung durch diese erfolgt. Darüber hinaus kann mit der erfindungsgemäßen Messvorrichtung auch eine Messung in nichtleitfähigen Behältern 2 erfolgen.

Fig. 2a zeigt einen zweiten Messmodus, in welchem das erfindungsgemäße Verfahren und die erfindungsgemäße Vorrichtung betreibbar sind, und bei welchem eine galvanische Verbindung 3 zwischen der Messelektronik 1 zu einer leitfähigen Behälterwand des Behälters 2 besteht.

In diesem zweiten Messmodus, bei dem an wenigstens eine der wenigstens drei Elektroden 5, 5', 5'' des Messfühlers 8 wenigstens ein erstes Potential angelegt wird und wenigstens ein zweites Potential an die elektrisch leitfähige Behälterwand des Behälters 2 angelegt wird, kann die elektrisch leitfähige Behälterwand 2 als Gegenelektrode 4 zu der wenigstens einen der wenigstens drei Elektroden 5, 5', 5'' des Messfühlers 8 betrieben werden, so dass sich ein Messfeld 6 zwischen der Behälterwand des Behälters 2 und wenigstens einer der wenigstens drei Elektroden 5, 5', 5'' des Messfühlers 8 ausbildet.

Figur 2b zeigt diesen zweiten Messmodus in einer weiteren, abgewandelten Ausführungsform der Erfindung, in der das erfindungsgemäße Verfahren und die erfindungsgemäße Vorrichtung betreibbar ist, bei welchem eine galvanische Verbindung 3 zwischen der Messelektronik 1 zu einer separaten Hilfselektrode 2b besteht.

In diesem zweiten Messmodus, bei dem an wenigstens eine der wenigstens drei Elektroden 5, 5', 5'' des Messfühlers 8 wenigstens ein erstes Potential angelegt wird und wenigstens ein zweites Potential an die gemäß Fig. 2b innerhalb des Behälters 2 separat zu dem Messfühler 8 angeordnete Hilfselektrode 2b angelegt wird, ist keine galvanische Verbindung 3 zwischen der Messelektronik 1 und einer Behälterwand 2 ausgebildet. In diesem Fall stellt beim Betreiben der Füllstandsmessung die separate Hilfselektrode 2b die Gegenelektrode zu der wenigstens einen der wenigstens drei Elektroden 5, 5', 5'' des Messfühlers 8 dar.

Nach dem erfindungsgemäßen Verfahren zur kapazitiven Füllstandsmessung wird die Messvorrichtung wahlweise entweder in dem ersten oder in dem zweiten Messmodus betrieben, wobei gemäß der Erfindung zwischen den wenigstens zwei Messmodi durch ein Umschaltwerk umgeschaltet wird. Eine Umschaltung zwischen den Messmodi erfordert somit gegebenenfalls eine Änderungsmöglichkeitder Elektrodenpotentiale und geschieht durch das erfindungsgemäße und in den Figuren nicht näher dargestellte Umschaltwerk, insbesondere als Teil der Messelektronik 1, welches somit verschiedene Potentiale, vorzugsweise auswählbar, insbesondere auch während des Betriebs, an die Messfühlerkontaktierung anlegen kann.

Im zweiten Messmodus gemäß der Ausführungsform nach Fig. 2a, bei galvanischer Verbindung 3 des Behälters 2 zur Messelektronik 1, wird dieser somit als eine Gegenelektrode 4 der Messkondensatoranordnung genutzt. Im zweiten Messmodus gemäß der Ausführungsform nach Fig. 2b, bei galvanischer Verbindung 3 des Behälters 2 zur separaten Hilfselektrode 2b, wird diese somit als eine Gegenelektrode 4 der Messkondensatoranordnung genutzt.

Prinzipiell kann es anwendungsspezifisch bereits genügen, in diesen beiden Fällen des zweiten Messmodus wenigstens eine Elektrode 5, 5', 5'' des Mehrelektrodenmessfühlers 8 als innere Messelektrode 5' zu verwenden.

In einer weiteren, in den Figuren 2a und 2b nicht näher gezeigten, bevorzugten Ausführungsform der Erfindung wird eine Parallelschaltung aller vorhandenen Elektroden 5, 5', 5'' durchgeführt. Infolgedessen ist somit an allen Elektroden 5, 5', 5'' dasselbe Potential angelegt. Diese Anordnung führt zu einem besseren Messeffekt.

Bevorzugte Ausführungsformen des erfindungsgemäßen Verfahrens zur kapazitiven Füllstandsmessung sehen daher vor, wahlweise an eine oder an mehrere der Elektroden 5, 5', 5'' des Messfühlers 8 ein gleiches Potential anzulegen, wobei dies insbesondere durch eine Parallelschaltung von zwei oder von mehreren Elektroden erfolgt.

Hierbei hat die Parallelschaltung einen positiven Effekt. Der Durchmesser der inneren Messelektrode der Messkondensatoranordnung hat wesentlichen Einfluss auf die Ausbildung des Messfeldes. Je kleiner der Durchmesser, desto größer ist die Feldstärke an der Messfühleroberfläche und umgekehrt. Bei inhomogenen Füllmaterialien, wie grobkörnigen Schüttgütern, ist für eine ausreichend gute Mittelwertbildung eine geringere Feldstärke, also ein größerer Elektrodendurchmesser erforderlich. Durch die Möglichkeit der Parallelschaltung zweier bis aller Einzelelektroden eines Messfühlers ist eine Anpassung an die Eigenschaften des Füllgutes möglich.

Die Figuren 3a und 3b zeigen eine bevorzugte Ausführungsform der Erfindung zur kapazitiven Füllstandsmessung als Schnittansicht durch ein dreiadriges als Messfühler 8 ausgebildetes Kabel mit einer Ummantelung 7 als Isolation.

Unter Anwendung des ersten Messmodus werden gemäß Figur 3a in einer bevorzugten Ausführungsform des erfindungsgemäßen Verfahrens, bevorzugt zwei als Elektroden 5 und 5' ausgebildete Adern eines Kabels als messende Elektroden mit den Potentialen 10, 4 verwendet und die dritte Elektrode 5'' als Schirmelektrode 9 mit einem Abschirmpotential 9 beaufschlagt.

Der gemäß einer entsprechenden erfindungsgemäßen Messvorrichtung ausgebildete Messfühler 8 nach Fig. 3a weist eine zu dem in den Figuren 1, 1a und 2b gezeigten Messfühler 8 abweichende Geometrie auf, da sich die Schirmelektrode 9 nicht zwischen den Elektroden 5 und 5' befindet, sondern zu diesen versetzt angeordnet ist.

Zwischen den Elektroden 5 und 5' bildet sich somit eine Messkondensatoranordnung mit einem Messfeld 6 aus, das in der oberen Bildhälfte zwischen den Elektroden 5 und 5' im Wesentlichen direkt ausgerichtet ist, während in der unteren Bildhälfte zwischen den Elektroden 5 und 5' sich ein Messfeld 6 ' ausbildet, welches sich weiter in den Behälter hinein erstreckt und sich um die Abschirmelektrode 9 herum ausrichtet.

Unter Anwendung des zweiten Messmodus werden, wie z.B. in Figur 3b gezeigt, in einer bevorzugten Ausführungsform der Erfindung, alle drei als Elektroden 5, 5', 5'' ausgebildete Adern des Kabels parallel geschaltet, das heißt es wird an diese Elektroden das gleiche Potential angelegt, wobei sich zwischen der leitfähigen Behälterwand 2 als Gegenelektrode 4 und den parallel geschalteten Elektroden 5, 5', 5'' eine Messkondensatoranordnung mit einem Messfeld 6 ausbildet.

Es sei jedoch darauf hingewiesen, dass auch weniger oder mehr als drei Elektroden 5, 5', 5'' parallel geschaltet werden können.

Die Figuren 4a und 4b zeigen bevorzugte Ausführungsformen der Erfindung zur kapazitiven Füllstandsmessung in stark vereinfachter Schnittansicht durch ein vieradriges als Messfühler 8 ausgebildetes Kabel mit einer Ummantelung 7 als Isolation.

Unter Anwendung des ersten Messmodus, werden gemäß Figur 4a in einem weiteren bevorzugten erfindungsgemäßen Verfahren zwei als Elektroden 5 und 5' ausgebildete, gegenüberliegende Adern eines Kabels als messende Elektroden mit den Potentialen 10, 4 verwendet und eine dritte Elektrode 5 '' und eine vierte Elektrode 5''' als Schirmelektroden 9 mit einem Abschirmpotential 9 beaufschlagt.

Die entsprechende, bevorzugte Ausführungsform der erfindungsgemäßen Messvorrichtung nach Fig. 4a bildet somit einen Messfühler 8 aus, der eine zu dem in der Figuren 3a gezeigten Messfühler 8 abweichende Geometrie aufweist, da sich beide Schirmelektroden 9 zwischen den Elektroden 5 und 5' befinden oder auch jeweils zu diesen etwas versetzt angeordnet sind. Zwischen den Elektroden 5 und 5' bildet sich somit eine Messkondensatoranordnung mit einem Messfeld 6 und 6' aus, das zwischen den Elektroden 5 und 5' nicht direkt ausgerichtet ist, sondern sich an zwei gegenüberliegenden Seiten des Messfühlers 8 symmetrisch, um die Abschirmelektroden 9 herum ausrichtet, ausbildet und sich an diesen beiden Seiten in den Behälter weit hinein erstreckt.

Unter Anwendung des zweiten Messmodus werden, wie in Figur 4b gezeigt, in einer bevorzugten Ausführungsform des erfindungsgemäßen Verfahrens, alle vier Elektroden 5, 5', 5'', 5''', welche z.B. entsprechend 4 Adern eines Kabels sind, parallel geschaltet. Es wird folglich an diese das gleiche Potential angelegt, wobei sich zwischen der leitfähigen Behälterwand 2 als Gegenelektrode 4 und den parallel geschalteten Elektroden 5, 5', 5'', 5''' eine Messkondensatoranordnung ausbildet.

Es sei jedoch darauf hingewiesen, dass auch weniger oder mehr als vier Elektroden 5, 5', 5'', 5''' parallel geschaltet werden können.

Die Figuren 5a und 5b zeigen eine bevorzugte Ausführungsform der erfindungsgemäßen Vorrichtung zur kapazitiven Füllstandsmessung in skizzenhafter Teilschnittansicht durch ein fünfadriges als Messfühler 8 ausgebildetes Kabel mit einer Ummantelung 7 als Isolation.

Unter Anwendung des ersten Messmodus werden in einer weiteren bevorzugten Ausführungsform der Erfindung nach Figur 5a z.B. zwei als Elektroden 5 und 5' ausgebildete, gegenüberliegende Adern eines Kabels als messende Elektroden mit den Potentialen 10,4 verwendet und eine dritte Elektrode 5 '', eine vierte Elektrode 5''' und eine fünfte Elektrode 5'''' als Schirmelektroden 9 mit einem Abschirmpotential 9 beaufschlagt.

Die entsprechende bevorzugte Ausführungsform der erfindungsgemäßen Messvorrichtung bildet einen Messfühler 8 aus und weist, wie in Fig. 5a gezeigt, somit eine zu dem in der Figuren 3a und 4a gezeigten Messfühlern 8 abweichende Geometrie auf, da sich lediglich eine Schirmelektrode 9 zwischen den Elektroden 5 und 5' befindet, und die weiteren als Schirmelektroden 9 ausgebildeten Elektroden 5'' und 5''' jeweils zu diesen versetzt angeordnet sind.

Zwischen den Elektroden 5 und 5' bildet sich somit eine Messkondensatoranordnung mit einem Messfeld 6 und 6' entsprechend der Figur 5a aus, das zwischen den Elektroden 5 und 5' nicht direkt ausgerichtet ist, sondern sich an zwei gegenüberliegenden Seiten des Messfühlers 8 um die Abschirmelektroden 9 herum ausrichten und symmetrisch ausbilden.

Unter Anwendung des zweiten Messmodus gemäß einer bevorzugten Ausführungsform des erfindungsgemäßen Verfahrens, können z.B., wie in Figur 5b gezeigt, alle fünf als Elektroden 5, 5', 5'', 5''', 5'''' ausgebildete Adern des Kabels bevorzugt parallel geschaltet werden, das heißt es wird an diese das gleiche Potential angelegt, wobei sich zwischen einer leitfähigen Behälterwand 2 als Gegenelektrode 4 und den parallel geschalteten Elektroden 5, 5', 5'', 5''', 5'''' eine Messkondensatoranordnung ausbildet.

Es sei jedoch darauf hingewiesen, dass auch weniger oder auch eine beliebige Anzahl von mehr als fünf Elektroden 5, 5', 5'', 5''', 5'''' parallel geschaltet werden können.

Die beschriebenen Ausführungsformen der Erfindung zeigen somit, dass bei Nutzung von Messfühlern mit einer größeren Anzahl von Elektroden, z.B. mit einer Anzahl von n Elektroden, z.B. mittels eines n-adrigen Kabels, gegenüber Messfühlern mit einer größeren Anzahl von Elektroden, z.B. mit einer Anzahl von (n-x) Elektroden, z.B. mittels eines (n-x)-adrigen Kabels, wobei x kleiner n ist, bessere Abschirmungseigenschaften und/oder eine gesteigerte Richtwirkung für das elektrische Messfeld 6, 6' erreicht werden können. Diesbezüglich ist ferner die Verwendung einer größeren Anzahl von Litzen bzw. Adern, bei entsprechenden mechanischen Eigenschaften, vorteilhaft, da sich zudem die Kabelflexibiltät erhöht.

Es sei ferner darauf hingewiesen, dass gemäß einer bevorzugten Ausführungsform der erfindungsgemäßen Vorrichtung mit einer Anzahl von n Elektroden, z.B. mittels eines n-adrigen Kabels, eine Vielzahl von Beschaltungsvarianten möglich ist. Wie auch bei den zuvor beschriebenen Kabelausführungen können im Fall des zweiten Messmodus mindestens eine, bevorzugt z.B. alle n Adern parallel als Messelektroden geschaltet und unter Verwendung einer leitfähigen Behälterwand 2 als Gegenelektrode 4 eine Messkondensatoranordnung realisiert werden. Im Falle des ersten Messmodus können wenigstens zwei äußere Adern als Messelektroden 5, 5 und 5' verwendet und mindestens eine, bevorzugt jedoch mehrere Elektroden 5'', 5''', 5'''' mit einem Abschirmpotential 9 beaufschlagt werden.

Darüber hinaus können in einer weiteren Ausführungsform der Erfindung auch äußere Messelektroden 5, 5' sowie weitere Messelektroden parallel geschaltet werden, das heißt an diese ein gleiches Potential angelegt werden, um beispielsweise den elektrisch wirksamen Durchmesser der Messelektroden des Messfühlers 8 zu vergrößern.

Für alle Ausführungsformen ist es ferner in einer bevorzugten, jedoch aus Gründen der Überschaubarkeit nicht dargestellten Ausführungsform der Erfindung auch möglich, dass zusätzlich zu dem Messfühler 8 wahlweise ein- oder mehrere weitere identische oder unterschiedliche Messfühler in den Behälter einzubringen, an die Messelektronik 1 anzuschließen und von dieser betreibbar sind.

Auch im Falle des zweiten Messmodus und einer weiteren bevorzugten Ausführungsform des erfindungsgemäßen Verfahrens und der erfindungsgemäßen Vorrichtung (nicht in den Figuren gezeigt) ist es ermöglicht, insbesondere wahlweise, dass das Messfeld 6 durch eine einseitige Abschirmung wenigstens einer der wenigstens drei Elektroden 5, 5', 5'', 5 ''', 5'''' des Messfühlers 8 ausgerichtet wird. Für eine solche einseitige Abschirmung kann z.B. auch die Ausführung nach Fig. 5b dahingehend abgewandelt werden, dass die Elektroden 5', 5'', 5 ''', 5'''' als Schirmelektroden 9 betrieben werden und die Elektrode 5 als Messelektrode geschaltet ist.

Das erfindungsgemäße Verfahren und die erfindungsgemäße Vorrichtung erlauben darüber hinaus die Verwendung von insbesondere flexiblen, starren, drahtförmig oder bandförmig ausgebildeten Messfühlern 8, welche bevorzugt auch an flexible oder starre Körper angebracht sein können und insbesondere in elektrisch isolierende Körper wie Sondenhülsen oder Führungsschienen integriert sind, beispielsweise an oder innerhalb von Isolationskörpern wie z.B. Kunststoffrohren oder Kunststoffhalterungen geführt. Sofern bevorzugte handelsübliche, mehradrige Kabel als Messfühler Verwendung finden, sei darauf hingewiesen, dass die bei diesen Kabeln übliche Verdrillung der Einzeladern keinen wesentlichen Einfluss auf das Messverhalten der erfindungsgemäßen Messvorrichtung hat.

Es sei jedoch auch darauf hingewiesen, dass die oben erwähnte Variante mit Richtwirkung mit verdrillten Kabeln nicht realisierbar ist. Für Messeinrichtung mit richtungsabhängiger Messempfindlichkeit werden infolgedessen in einer bevorzugten Ausführungsform der Erfindung unverdrillte Kabel eingesetzt, wobei die Richtwirkung durch geeignete unsymmetrische Parallelschaltung von Einzeladern erreicht wird.

Prinzipiell sind zur Ausführung der Erfindung viele Querschnittsformen für die Elektroden 5, 5', 5'', 5''', 5'''' möglich. Für besondere Anforderungen können Spezialkabel mit unterschiedlich ausgebildeten Einzelelektroden zur Verwendung kommen. Dabei sind band- bzw. streifenförmige Elektroden wegen ihrer größeren Oberflächen besonders bevorzugt einzusetzen.

Ferner sind in Messfühlern 8 angeordnete Elektroden 5, 5', 5'', 5''', 5'''' einer bevorzugten Ausführungsform der erfindungsgemäßen Vorrichtung zur kapazitiven Füllstandsmessung mit Isolierstoffen zu einem Verbund ausgebildet, so dass diese Elektroden bei der Füllstandsmessung von Flüssigkeiten und/oder Schüttgütern gegenüber diesen chemisch beständig sind und/oder eine Abriebbeständigkeit und Zugfestigkeit gewährleisten.

Eine mögliche elektronische Auswertung durch die Messelektronik 1 von den erfindungsgemäß gewonnenen elektrischen Primärsignalen ist beispielsweise aus der DE 1275777 bekannt.

Ferner sehen weitere bevorzugte Weiterbildungen vor, dass die erfindungsgemäße Vorrichtung zur kapazitiven Füllstandsmessung dazu ausgebildet ist, die Gewinnung von mindestens einem Grenzwertschaltsignal, mindestens einem analogen Füllstandssignal oder gleichzeitig einer Kombination aus analogen Füllstandssignalen und Grenzwertsignalen zu ermöglichen.

In dieser Hinsicht wird insbesondere auf die am 27. November 2012 mit dem Titel "Verfahren und Vorrichtung zur kapazitiven Füllstandsmessung mit Kabelsonde oder Stabsonde" eingereichte Europäische Anmeldung EP 12007966.0 der selben Anmelderin Bezug genommen, deren Inhalt hiermit in diese Anmeldung aufgenommen wird und gemäß welcher Vorrichtungen und Verfahren zur kapazitiven Füllstandsmessung beschrieben sind, mit einer Füllstandssonde, welche sowohl als Kabelsonde oder auch als Stabsonde ausgebildet sein kann, Füllstandsmessungen und insbesondere auch Analog-Füllstandsmessungen und/oder kombinierte Analog/Grenzwert-Füllstandsmessungen für Flüssigkeiten und Schüttgüter in einem Behälter, der sowohl leitfähig als auch nichtleitfähig sein kann, durchzuführen.

Hierbei wird die Füllstandssonde zur Füllstandsmessung im Wesentlichen vertikal in den Behälter eingebracht und erstreckt sich im eingebrachten Zustand somit im Wesentlichen vertikal in den Behälter hinein, wobei durch wenigstens eine an der Füllstandssonde ausgebildete erste Elektrodenanordnung eine Messstrecke definiert und an wenigstens einem Ende dieser Messstrecke geometrisch eine zusätzliche zweite Elektrodenanordnung ausgebildet wird, durch welche wenigstens ein Endpunkt für eine Messfeldbegrenzung und damit eine materialunabhängige Detektierbarkeit dieses wenigstens einen Endpunktes bewirkt wird. Jeder solcher Endpunkte kann dann für die Kompensation der durch Permittivitätsänderungen des Füllgutes hervorgerufenen systematischen Verfälschungen herangezogen werden, so dass damit materialunabhängige Analogsignale für beliebig große Messstrecken erhalten werden. Hierbei können analoge Füllstandsmessungen mit einem von der Permittivität des Füllgutes unabhängigen Bezugspunkt oder Endpunkt ausgeführt werden, während der Analogmessung und davon unabhängig ein oder mehrere von der Permittivität des Füllgutes unabhängige Überfüllsignale zur Verfügung gestellt werden und/oder automatische Nachkalibrierungen eines Endpunktes der analogen Messung bei Permittivitätsänderungen des Füllgutes durchgeführt werden kann.

### Bezugzeichen

- 1: Messelektronik
- 2: Behälter, Behälterwand
- 2b: Hilfselektrode
- 3: galvanische Verbindung zwischen Messelektronik und Behälter / Hilfselektrode
- 4: als Gegenelektrode betriebene Elektrode(n), Potential der Gegenelektrode(n)
- 5: Elektrode
- 5': Elektrode
- 5": Elektrode
- 5"': Elektrode
- 5"": Elektrode
- 6: Elektrisches Messfeld
- 6': Elektrisches Messfeld
- 7: Isolation
- 8: Messfühler
- 9: als Schirmelektrode betriebene Elektrode(n), Potential der Schirmelektrode(n)
- 10: als Messelektrode betriebene Elektrode(n), Potential der Messelektrode(n)

## Patentansprüche

1. Verfahren zur kapazitiven Füllstandsmessung von Flüssigkeiten und/oder Schüttgütern in einem Behälter (2) mit wenigstens einem, an eine Messelektronik angeschlossenen Messfühler (8),
wobei der Messfühler (8) aus mehreren, wenigstens drei gegeneinander elektrisch isolierten Elektroden (5, 5', 5'', 5 ''', 5'''') aufgebaut ist, die zur Füllstandsmessung in den Behälter (2) eingebracht werden und sich im eingebrachten Zustand in den Behälter (2) erstrecken, und
wobei diese wenigstens drei Elektroden (5, 5', 5'', 5 ''', 5'''') an die Messelektronik (1) angeschlossen werden und in wenigstens einem ersten oder in wenigstens einem zweiten Messmodus betrieben werden, wobei
(a) in dem ersten Messmodus an die wenigstens drei Elektroden (5, 5', 5'', 5 ''', 5'''') des Messfühlers (8) jeweils unterschiedliche Potentiale angelegt werden, wobei an eine erste Elektrode (5) ein erstes Potential (10) angelegt wird, an eine zweite Elektrode (5') ein gegenüber dem ersten Potential unterschiedliches zweites Potential (4) angelegt wird, und die zweite Elektrode als Gegenelektrode (4) zu der ersten Elektrode (10) betrieben wird, und an die dritte Elektrode (5'', 5''', 5 '''') ein gegenüber dem ersten und dem zweiten Potential unterschiedliches drittes Potential (9) angelegt wird, und die dritte Elektrode als eine Schirmelektrode (9) betrieben wird;
(b) in dem zweiten Messmodus ein erstes Potential (10) an wenigstens eine der wenigstens drei Elektroden (5, 5', 5'', 5 ''', 5'''') des Messfühlers (8) angelegt wird und wenigstens ein gegenüber dem ersten Potential unterschiedliches zweites Potential (4) entweder
- an eine elektrisch leitfähige Behälterwand (2) angelegt wird, wobei die Messelektronik (1) und die elektrisch leitfähige Behälterwand (2) galvanisch miteinander verbunden (3) werden, und die elektrisch leitfähige Behälterwand (2) als Gegenelektrode zu der wenigstens einen mit dem ersten Potential belegten Elektrode (5, 5', 5'', 5 ''', 5'''') des Messfühlers (8) betrieben wird, oder
- an eine separat zu dem Messfühler (8) innerhalb des Behälters (2) oder außen an der Behälterwand angeordnete Hilfselektrode (2b) angelegt wird, wobei die Messelektronik (1) und die Hilfselektrode (2b) galvanisch miteinander verbunden (3) werden, und die Hilfselektrode (2b) als Gegenelektrode (4) zu der wenigstens einen mit dem ersten Potential (10) belegten Elektrode (5, 5', 5'', 5 ''', 5'''') des Messfühlers (8) betrieben wird, **dadurch gekennzeichnet, dass**
das Verfahren wahlweise entweder in dem ersten oder in dem zweiten Messmodus betrieben wird und eine Auswahl von einem der wenigstens zwei Messmodi erfolgt, indem zwischen den wenigstens zwei Messmodi durch ein Umschaltwerk umgeschaltet wird.

2. Verfahren nach Anspruch 1, wobei wahlweise an eine oder an mehrere der Elektroden (5, 5', 5', 5 ''', 5'''') des Messfühlers (8) ein gleiches Potential angelegt wird.

3. Verfahren zur kapazitiven Füllstandsmessung nach einem der Ansprüche 1 bis 2, **gekennzeichnet dadurch, dass** zusätzlich zu dem Messfühler (8) wahlweise ein- oder mehrere weitere identische oder unterschiedliche Messfühler in den Behälter eingebracht und an die Messelektronik (1) angeschlossen und betrieben werden.

4. Verfahren zur kapazitiven Füllstandsmessung nach einem der Ansprüche 1 bis 3, **gekennzeichnet dadurch, dass** zwischen den wenigstens zwei Messmodi durch ein als Teil der Messelektronik ausgebildetes Umschaltwerk umgeschaltet wird.

5. Verfahren zur kapazitiven Füllstandsmessung nach einem der Ansprüche 1 bis 4 **gekennzeichnet dadurch, dass** im Falle des zweiten Messmodus das Messfeld (6) durch eine einseitige Abschirmung in Form mehrerer, als Schirmelektroden (9) betriebener Elektroden für wenigstens eine der wenigstens drei Elektroden (5, 5', 5'', 5 ''', 5'''') des Messfühlers (8) ausgerichtet wird.

6. Vorrichtung zur kapazitiven Füllstandsmessung von Flüssigkeiten und/oder Schüttgütern in einem Behälter (2) mit wenigstens einem an eine Messelektronik anschließbaren Messfühler (8) nach einem der Ansprüche 1 bis 6, wobei die Messelektronik (1) wenigstens drei unterschiedliche Potentiale (4, 9, 10) bereitstellt und der Messfühler (8) aus mehreren, wenigstens drei gegeneinander elektrisch isolierten Elektroden (5, 5', 5'', 5 ''', 5'''') gebildet ist, die zur Füllstandsmessung in den Behälter (2) einzubringen sind und sich im eingebrachten Zustand in den Behälter (2) erstrecken,
und die Vorrichtung in wenigstens einem ersten oder in wenigstens einem zweiten Messmodus betreibbar ist, wobei diese wenigstens drei Elektroden (5, 5', 5'', 5 ''', 5'''') derart an die Messelektronik (1) anschließbar sind, dass
(a) in dem ersten Messmodus an die wenigstens drei Elektroden (5, 5', 5'', 5 ''', 5'''') des Messfühlers (8) die jeweils drei unterschiedlichen Potentiale (4, 9, 10) angelegt sind, wobei an eine erste Elektrode (5) ein erstes Potential (10) angelegt ist, an eine zweite Elektrode (5') ein gegenüber dem ersten Potential unterschiedliches zweites Potential (4) angelegt ist, um die zweite Elektrode als Gegenelektrode (4) zu der ersten Elektrode (10) zu betreiben, und an die dritte Elektrode (5'', 5''', 5 '''') ein gegenüber dem ersten und dem zweiten Potential unterschiedliches drittes Potential (9) angelegt ist, um die dritte Elektrode als eine Schirmelektrode (9, 9', 9'') zu betreiben;
(b) in dem zweiten Messmodus ein erstes Potential (10) an wenigstens eine der wenigstens drei Elektroden (5, 5', 5'', 5 ''', 5'''') des Messfühlers (8) angelegt ist und wenigstens ein gegenüber dem ersten Potential unterschiedliches zweites Potential (4) entweder
- an eine elektrisch leitfähige Behälterwand (2) angelegt ist, wobei die Messelektronik (1) und die elektrisch leitfähige Behälterwand (2) galvanisch miteinander verbunden (3) sind, um die elektrisch leitfähige Behälterwand (2) als Gegenelektrode (4) zu der wenigstens einen mit dem ersten Potential (10) belegten Elektrode (5, 5', 5'', 5 ''', 5'''') des Messfühlers (8) zu betreiben, oder
- an eine separat zu dem Messfühler (8) innerhalb des Behälters (2) oder außen an der Behälterwand angeordnete Hilfselektrode (2b) angelegt ist, wobei die Messelektronik (1) und die Hilfselektrode (2b) galvanisch miteinander verbunden (3) sind, um die Hilfselektrode (2b) als Gegenelektrode (4) zu der wenigstens einen mit dem ersten Potential belegten Elektrode (5, 5', 5'', 5 ''', 5'''') des Messfühlers (8) zu betreiben,
**dadurch gekennzeichnet, dass**
die Vorrichtung dazu ausgebildet ist, wahlweise entweder in dem ersten oder in dem zweiten Messmodus betrieben zu werden und zur Auswahl von einem der wenigstens zwei Messmodi ein Umschaltwerk aufweist, durch welches zwischen den wenigstens zwei Messmodi umgeschaltet wird.

7. Vorrichtung zur kapazitiven Füllstandsmessung nach Anspruch 6, wobei die Vorrichtung dazu ausgebildet ist, wahlweise an eine oder an mehrere der Elektroden (5, 5', 5'', 5 ''', 5'''') des Messfühlers (8) ein gleiches Potential anzulegen.

8. Vorrichtung zur kapazitiven Füllstandsmessung nach einem der Ansprüche 6 bis 7, wobei die Elektroden (5, 5', 5'', 5 ''', 5'''') des Messfühlers (8) starr, flexibel, drahtförmig oder bandförmig ausgebildet sind und/oder in einem mechanischen Verbund ausgebildet sind und/oder, dass als Messfühler insbesondere handelsübliche, mehradrige Kabel als Messfühler verwendbar sind.

9. Vorrichtung zur kapazitiven Füllstandsmessung nach einem der Ansprüche 6 bis 8, wobei die Elektroden (5, 5', 5'', 5 ''', 5'''') des Messfühlers (8) in dem Behälter (2) parallel zueinander geführt sind oder zumindest abschnittsweise zueinander konstante Abstände aufweisen.

10. Vorrichtung zur kapazitiven Füllstandsmessung nach einem der Ansprüche 6 bis 9, **gekennzeichnet dadurch, dass** zusätzlich zu dem Messfühler (8) wahlweise ein- oder mehrere weitere identische oder unterschiedliche Messfühler in den Behälter einbringbar und an die Messelektronik (1) anschließbar und betreibbar sind.

11. Vorrichtung zur kapazitiven Füllstandsmessung nach einem der Ansprüche 6 bis 10, **gekennzeichnet dadurch, dass** die in den Messfühlern angeordneten Elektroden mit Isolierstoffen zu einem Verbund ausgebildet sind, welche bei der Füllstandsmessung von Flüssigkeiten und/oder Schüttgütern gegenüber diesen chemisch beständig sind und/oder eine Abriebbeständigkeit und Zugfestigkeit gewährleisten.

12. Vorrichtung zur kapazitiven Füllstandsmessung nach einem der Ansprüche 6 bis 11, **gekennzeichnet dadurch, dass** die Vorrichtung ausgebildet ist, die Gewinnung von mindestens einem Grenzwertschaltsignal, mindestens einem analogen Füllstandssignal oder gleichzeitig einer Kombination aus analogen Füllstandssignalen und Grenzwertsignalen zu ermöglichen.

## Claims

1. A method for capacitive fill level measurement liquids and/or bulk materials in a container (2) using at least one measuring sensor (8) that is connected to measuring electronics,
wherein the measuring sensor (8) is constructed from a plurality of, at least three electrodes (5, 5', 5'', 5 ''', 5'''') which are electrically insulated from one another and which, for measuring the fill level, are inserted into the container (2) and in the inserted state extend into the container (2), and
wherein these at least three electrodes (5, 5', 5'', 5 ''', 5'''') are connected to the measuring electronics (1) and are adapted to operate in at least a first measuring mode or in at least a second measuring mode, wherein
(a) in the first measuring mode, in each case, different potentials are applied to the at least three electrodes (5, 5', 5'', 5 ''', 5'''') of the measuring sensor (8), wherein a first potential (10) is applied to a first electrode (5), a second potential (4) that is different with respect to the first potential is applied to a second electrode (5'), and the second electrode is operated as a counter electrode (4) to the first electrode (10), and a third potential (9) that is different with respect to the first and the second potentials is applied to the third electrode (5'', 5''', 5 ''''), and the third electrode is operated as a guard electrode (9);
(b) in the second measuring mode, a first potential (10) is applied to at least one of the at least three electrodes (5, 5', 5'', 5 ''', 5'''') of the measuring sensor (8), and at least one second potential (4) that is different with respect to the first potential is applied to either
- an electrically conductive container wall (2), wherein the measuring electronics (1) and the electrically conductive container wall (2) are galvanically connected (3) to one another, and the electrically conductive container wall (2) is operated as a counter electrode to the at least one electrode (5, 5', 5'', 5 ''', 5'''') of the measuring sensor (8) to which the first potential is applied, or
- to an auxiliary electrode (2b) that is separate from the measuring sensor (8) and is arranged within the container (2) or on the outside on the container wall, wherein the measuring electronics (1) and the auxiliary electrode (2b) are galvanically connected (3) to one another, and the auxiliary electrode (2b) is operated as a counter electrode (4) to the at least one electrode (5, 5', 5'', 5 ''', 5'''') of the measuring sensor (8) to which the first potential (10) is applied,
**characterized in that**
the method is selectively operated either in the first measuring mode or in the second measuring mode, and a selection of one of the first and second measuring mode is made, by switching between the first and second measuring modes by a switching mechanism.

2. Method according to claim 1, wherein a same potential is selectively applied to one or to a plurality of the at least three electrodes (5, 5', 5'', 5 ''', 5'''') of the measuring sensor (8).

3. Method for capacitive fill level measurement according to any of claims 1 to 2, **characterized in that** in addition to the measuring sensor (8), selectively one or a plurality of further identical or different measuring sensors are inserted into the container, are connected to the measuring electronics (1) and operated.

4. Method for capacitive fill level measurement according to any of claims 1 to 3, **characterized in that** it is switched between the at least two measuring modes by a switching mechanism which is formed as part of the measuring electronics.

5. Method for capacitive fill level measurement according to any of claims 1 to 4, **characterized in that** in the case of the second measuring mode, the measuring field (6) is aligned for at least one of the at least three electrodes (5, 5', 5'', 5 ''', 5'''') of the measuring sensor (8) by a one-sided shielding in the form of a plurality of electrodes that are operated as guard electrodes (9).

6. Device for capacitive fill level measurement of liquids and/or bulk materials in a container (2) using at least one measuring sensor according to any of the claims 1 to 5 which can be connected to measuring electronics, wherein the measuring electronics (1) provides at least three different potentials (4, 9, 10) and the measuring sensor (8) is formed from at least three electrodes (5, 5', 5'', 5 ''', 5'''') which are electrically insulated from one another and which, for measuring the filling level, are to be inserted into the container (2) and extend in the inserted state into the container (2),
and the device is adapted to operate in at least a first measuring mode and in at least a second measuring mode, wherein these at least three electrodes (5, 5', 5'', 5 ''', 5'''') can be connected to the measuring electronics (1) in such a manner that:
(a) in the first measuring mode, in each case three different potentials (4, 9, 10) are applied to the at least three electrodes (5, 5', 5'', 5 ''', 5'''') of the measuring sensor (8), wherein a first potential (10) is applied to a first electrode (5), a second potential (4) that is different with respect to the first potential is applied to a second electrode (5') so as to operate the second electrode as a counter electrode (4) to the first electrode (10), and a third potential (9) that is different with respect to the first and the second potentials is applied to the third electrode (5'', 5 ''', 5 '''') so as to operate the third electrode as a guard electrode (9, 9', 9'');
(b) in the second measuring mode, a first potential (10) is applied to at least one of the at least three electrodes (5, 5', 5'', 5 ''', 5'''') of the measuring v and at least one second potential (4) that is different with respect to the first potential is applied to either
- an electrically conductive container wall (2), wherein the measuring electronics (1) and the electrically conductive container wall (2) are galvanically connected (3) to one another so as to operate the electrically conductive container wall (2) as a counter electrode (4) to the at least one electrode (5, 5', 5'', 5 "', 5'''') of the measuring sensor (8), or
- to an auxiliary electrode (2b) that is separate from the measuring sensor (8) and is arranged within the container (2) or on the outside on the container wall, wherein the measuring electronics (1) and the auxiliary electrode (2b) are galvanically connected (3) to one another so as to operate the auxiliary electrode (2b) as a counter electrode (4) to the at least one electrode (5, 5', 5'', 5 ''', 5'''') of the measuring sensor (8) to which the first potential is applied, **characterized in that** the device is designed to be selectively operated either in the first measuring mode or in the second measuring mode and comprises a switching mechanism for selecting one of the first and second measuring modes and for switching between the first and second measuring modes.

7. Device for capacitive fill level measurement according to claim 6, wherein the device is designed to apply the same potential selectively to one or to a plural of the at least three electrodes (5, 5', 5'', 5 ''', 5'''') of the measuring sensor (8).

8. Device for capacitive fill level measurement according to any of claims 6 to 7 wherein the at least three electrodes (5, 5', 5'', 5 ''', 5'''') of the measuring sensor (8) are formed to be rigid, flexible, wire-shaped, strip-shaped and /or in a mechanical bond, and/or that in particular customary multi-core cables can be used as measuring sensors.

9. Device for capacitive fill level measurement according to any of claims 6 to 8, wherein the at least three electrodes (5, 5', 5'', 5 ''', 5'''') of the measuring sensor (8) in the container (2) are led parallel to one another or have distances from one another that are constant at least in certain sections.

10. Device for capacitive fill level measurement according to any of claims 6 to 9, **characterized in that** in addition to the measuring sensor (8), selectively one or a plurality of further identical or different measuring sensors can be inserted into the container and can be connected to the measuring electronics (1) and operated.

11. Device for capacitive fill level measurement according to any of claims 6 to 10, **characterized in that** the electrodes arranged in the measuring sensors form a bond together with insulation materials which, during the fill level measurement of liquids and/or bulk materials, are chemically resistant to said liquids and/or bulk materials, and/or ensure abrasion resistance and tensile strength.

12. Device for capacitive fill level measurement according to any of claims 6 to 11, **characterized in that** the device is designed so as to enable the recovery of at least one limit value switching signal, at least one analogue fill level signal, or, at the same time, a combination of analogue fill level signals and limit value signals.

## Revendications

1. Procédé de mesure capacitive du niveau de remplissage d'un contenant (2) en liquides et/ou en produits en vrac, au moyen d'au moins un capteur de mesure (8) raccordé à une électronique de mesure,
dans lequel le capteur de mesure (8) est composé de plusieurs électrodes (5, 5', 5", 5"', 5"") isolées électriquement les unes des autres, qui sont introduites dans le contenant (2) pour mesurer le niveau de remplissage et qui, une fois introduites, s'étendent dans le contenant (2), et
dans lequel ces au moins trois électrodes (5, 5', 5", 5"'), 5"'') sont raccordées à l'électronique de mesure (1) et fonctionnent dans au moins un premier ou dans au moins un deuxième mode de mesure, où :
(a) dans le premier mode de mesure, des potentiels respectivement différents sont appliqués sur lesdites au moins trois électrodes (5, 5', 5", 5"', 5"") du capteur de mesure (8), dans lequel un premier potentiel (10) est appliqué sur une première électrode (5), un deuxième potentiel (4) différent du premier potentiel est appliqué sur une deuxième électrode (5'), et la deuxième électrode fonctionne comme une contre-électrode (4) par rapport à la première électrode (10), et un troisième potentiel (9) différent du premier et du deuxième potentiel est appliqué sur la troisième électrode (5", 5"' , 5""), et la troisième électrode fonctionne comme une électrode de garde (9) ;
(b) dans le deuxième mode de mesure, un premier potentiel (10) est appliqué sur au moins une desdites au moins trois électrodes (5, 5', 5", 5"', 5"'') du capteur de mesure (8) et au moins un deuxième potentiel (4) différent du premier potentiel est soit
- appliqué sur une paroi de contenant (2) électroconductrice, dans lequel l'électronique de mesure (1) et la paroi de contenant (2) électroconductrice sont reliées (3) l'une à l'autre de manière galvanique, et la paroi de contenant (2) électroconductrice fonctionne comme une contre-électrode par rapport à ladite au moins une électrode (5, 5', 5", 5"', 5""), soumise au premier potentiel, du capteur de mesure (8), soit
- appliqué sur une électrode auxiliaire (2b) agencée séparément du capteur de mesure (8) à l'intérieur du contenant (2) ou à l'extérieur sur la paroi de contenant, dans lequel l'électronique de mesure (1) et l'électrode auxiliaire (2b) sont reliées (3) l'une à l'autre de manière galvanique, et l'électrode auxiliaire (2b) fonctionne comme une contre-électrode (4) par rapport à ladite au moins une électrode (5, 5' , 5", 5"', 5""), soumise au premier potentiel (10), du capteur de mesure (8),
le procédé étant **caractérisé en ce qu'**il fonctionne sélectivement soit dans le premier soit dans le deuxième mode de mesure et une sélection d'un desdits au moins deux modes de mesure s'opère par le fait qu'un basculement entre lesdits au moins deux modes de mesure est réalisé par un dispositif de basculement.

2. Procédé selon la revendication 1, dans lequel un potentiel identique est appliqué sélectivement sur une ou sur plusieurs des électrodes (5, 5', 5", 5"', 5"'') du capteur de mesure (8).

3. Procédé de mesure capacitive du niveau de remplissage selon l'une quelconque des revendications 1 et 2, **caractérisé en ce que**, en plus du capteur de mesure (8), sélectivement un ou plusieurs autres capteurs de mesure identiques ou différents sont introduits dans le contenant et raccordés à l'électronique de mesure (1) et actionnés.

4. Procédé de mesure capacitive du niveau de remplissage selon l'une quelconque des revendications 1 à 3, **caractérisé en ce qu'**un basculement entre lesdits au moins deux modes de mesure est réalisé par un dispositif de basculement réalisé sous la forme d'une partie de l'électronique de mesure.

5. Procédé de mesure capacitive du niveau de remplissage selon l'une quelconque des revendications 1 à 4, **caractérisé en ce que**, dans le cas du deuxième mode de mesure, le champ de mesure (6) est orienté par un blindage unilatéral se présentant sous forme de plusieurs électrodes fonctionnant comme des électrodes de garde (9) pour au moins une desdites au moins trois électrodes (5, 5', 5", 5"', 5"") du capteur de mesure (8).

6. Dispositif de mesure capacitive du niveau de remplissage d'un contenant (2) en liquides et/ou en produits en vrac comprenant au moins un capteur de mesure (8) pouvant être raccordé à une électronique de mesure selon l'une quelconque des revendications 1 à 5, dans lequel l'électronique de mesure (1) fournit au moins trois potentiels (4, 9, 10) différents et le capteur de mesure (8) est formé de plusieurs, au moins trois, électrodes (5, 5' , 5", 5"', 5"") isolées électriquement les unes des autres, lesquelles sont destinées à être introduites dans le contenant (2) pour mesurer le niveau de remplissage et lesquelles, une fois introduites, s'étendent dans le contenant (2),
et le dispositif fonctionnant dans au moins un premier ou dans au moins un deuxième mode de mesure, dans lequel ces au moins trois électrodes (5, 5' , 5", 5"', 5"'') peuvent être raccordées à l'électronique de mesure (1) de telle manière que
(a) dans le premier mode de mesure, les respectivement trois potentiels (4, 9, 10) différents sont appliqués sur lesdites au moins trois électrodes (5, 5', 5", 5"', 5"'') du capteur de mesure (8), dans lequel un premier potentiel (10) est appliqué sur une première électrode (5), un deuxième potentiel (4) différent du premier potentiel est appliqué sur une deuxième électrode (5'), afin de faire fonctionner la deuxième électrode comme une contre-électrode (4) par rapport à la première électrode (10), et un troisième potentiel (9) différent du premier et du deuxième potentiel est appliqué sur la troisième électrode (5", 5"', 5""), afin de faire fonctionner la troisième électrode comme une électrode de garde (9, 9', 9") ;
(b) dans le deuxième mode de mesure, un premier potentiel (10) est appliqué sur au moins une desdites au moins trois électrodes (5, 5', 5", 5"', 5"'') du capteur de mesure (8) et au moins un deuxième potentiel (4) différent du premier potentiel est soit
- appliqué sur une paroi de contenant (2) électroconductrice, où l'électronique de mesure (1) et la paroi de contenant (2) électroconductrice sont reliées (3) l'une à l'autre de manière galvanique, afin de faire fonctionner la paroi de contenant (2) électroconductrice comme une contre-électrode (4) par rapport à ladite au moins une électrode (5, 5', 5", 5"', 5""), soumise au premier potentiel (10), du capteur de mesure (8), soit
- appliqué sur une électrode auxiliaire (2b) agencée séparément du capteur de mesure (8) à l'intérieur du contenant (2) ou à l'extérieur sur la paroi de contenant, où l'électronique de mesure (1) et l'électrode auxiliaire (2b) sont reliées (3) l'une à l'autre de manière galvanique, afin de faire fonctionner l'électrode auxiliaire (2b) comme une contre-électrode (4) par rapport à ladite au moins une électrode (5, 5', 5", 5"', 5""), soumise au premier potentiel, du capteur de mesure (8),
le dispositif étant **caractérisé en ce que** :
il est conçu pour fonctionner sélectivement soit dans le premier soit dans le deuxième mode et, pour la sélection d'un desdits au moins deux modes de mesure, présente un dispositif de basculement par l'intermédiaire duquel un basculement s'opère entre lesdits au moins deux modes de mesure.

7. Dispositif de mesure capacitive du niveau de remplissage selon la revendication 6, le dispositif étant conçu pour appliquer un potentiel identique sélectivement sur une ou plusieurs des électrodes (5, 5', 5", 5"', 5"") du capteur de mesure (8).

8. Dispositif de mesure capacitive du niveau de remplissage selon l'une quelconque des revendications 6 et 7, dans lequel les électrodes (5, 5', 5", 5"', 5"") du capteur de mesure (8) sont rigides, flexibles, filiformes ou en forme de bande et/ou sont réalisées dans un ensemble mécanique et/ou en ce que des câbles multibrins, en particulier disponibles dans le commerce, peuvent être utilisés comme capteurs de mesure.

9. Dispositif de mesure capacitive du niveau de remplissage selon l'une quelconque des revendications 6 à 8, dans lequel les électrodes (5, 5', 5", 5"', 5"'') du capteur de mesure (8) sont guidées parallèlement les unes aux autres dans le contenant (2) ou présentent au moins en partie des distances constantes les unes par rapport aux autres.

10. Dispositif de mesure capacitive du niveau de remplissage selon l'une quelconque des revendications 6 à 9, **caractérisé en ce que**, en plus du capteur de mesure (8), sélectivement un ou plusieurs autres capteurs de mesure identiques ou différents peuvent être introduits dans le contenant et raccordés à l'électronique de mesure (1) et actionnés.

11. Dispositif de mesure capacitive du niveau de remplissage selon l'une quelconque des revendications 6 à 10, **caractérisé en ce que** les électrodes agencées dans les capteurs de mesure sont pourvues de matières isolantes de manière à obtenir un ensemble, lesquelles, lors de la mesure du niveau de remplissage en liquides et/ou en produits en vrac, sont résistantes chimiquement à ces derniers et/ou garantissent une résistance à l'abrasion et une résistance à la traction.

12. Dispositif de mesure capacitive du niveau de remplissage selon l'une quelconque des revendications 6 à 11, le dispositif étant **caractérisé en ce qu'**il est conçu pour permettre l'acquisition d'au moins un signal de commutation de valeur limite, d'au moins un signal analogique de niveau de remplissage ou simultanément d'une combinaison de signaux analogiques de niveau de remplissage et de signaux de valeur limite.
